# EUROPEAN PATENT SPECIFICATION

(11) **EP 4 124 083 B1**
(45) Date of publication and mention of the grant of the patent: **18.02.2026**
(21) Application number: 20925952.2
(22) Date of filing: 19.03.2020
(51) Int. Cl.: H04W 4/40, H04L 67/5681, H04L 67/5683, H04W 84/00

(54) **WIRELESS COMMUNICATION NODE**
DRAHTLOSKOMMUNIKATIONSKNOTEN
NOEUD DE COMMUNICATION SANS FIL

(43) Date of publication of application: 25.01.2023
(73) Proprietor: NTT DOCOMO, INC., Chiyoda-Ku Tokyo 100-6150 (JP)
(72) Inventor: KURITA Daisuke, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2020/012494
(87) International publication number: WO 2021/186721

(56) References cited:
- WO-A1-2013/025168
- JP-A- 2012 049 675
- JP-A- 2017 169 093
- JP-A- 2018 056 774
- US-A1- 2015 092 676

## Description

### Technical Field

The present disclosure relates to a radio communication node installed in and moving with a car or the like, and a terminal.

### Background Art

The 3rd Generation Partnership Project (3GPP) has provided the specifications for the 5th generation mobile communication system (5G, or also referred to as New Radio (NR) or Next Generation (NG)), and is now defining the specifications for the next generation system called Beyond 5G, 5G Evolution, or 6G.

Meanwhile, forms of cars have changed largely as represented by CASE (Connected, Autonomous, Shared, Electric) and the notion that non-car makers may enter car production in near future is now realistic.

Given such trends, it is expected that the car itself will be equipped with more sophisticated radio communication functions. For example, it is readily feasible, in comparison to mobile terminals such as smartphones, to install a battery or memory with a compellingly higher capacity, to obtain higher antenna gain, reception sensitivity, and higher power transmission, and to install radio base station (BS) functions.

For NR, Integrated Access and Backhaul (IAB) is being studied (see Non Patent Literature 1), which integrates radio access to a terminal (User Equipment (UE)) and radio backhaul between radio communication nodes such as radio base stations in a radio access network (RAN). Accordingly it is expected that radio communication nodes that support IAB (which may be referred to as IAB nodes) may be installed in cars.

### Citation List

### Patent Literature

Patent Literature 1: JP 2017 169093 A discloses relaying a data packet including an interest packet and content data in a content-oriented network using mobile relay nodes.
Patent Literature 2: US 2015/092676 A1 discloses a system and method using mm-wave superspots to download high volumes of data to a moving or stationary mobile device travelling along a travel route that the moving mobile device is travelling.
Patent Literature 3: WO 2013/025168 A1 discloses wireless networks that use movable/mobile radio access points, **APs.**
Patent Literature 4: JP 2018 056774 Adiscloses a base station for a vehicle for dynamically forming a cell capable of mobile communications of high quality.
Patent Literature 5: JP 2012 049675 A discloses methods for enabling a terminal to select a base station among multiple base stations including mobile base stations.

### Non Patent Literature

Non Patent Literature 1: 3GPP TR 38.874 V16.0.0, 3rd Generation Partnership Project; Technical Specification Group Radio Access Network; NR; Study on Integrated Access and Backhaul; (Release 16), 3GPP, December 2018

### Summary of Invention

If an IAB node is to be installed in cars as mentioned above, it is expected that appropriate data communications suited to the movement of the IAB node will be necessary because the IAB node will be constantly moving.

Accordingly, the following disclosure is made in view of such circumstances, with an object that is to provide a radio communication node capable of realizing appropriate data communication with terminals even when the nodes are installed in cars and the like and moving therewith, and a terminal that executes radio communication with this radio communication node.

The present invention is defined by the independent claims. Preferred embodiments are defined by the dependent claims. Further aspects are provided for facilitating the understanding of the invention.

### Brief Description of Drawings

Fig. 1 is an overall schematic configuration diagram of a radio communication system 10.
Fig. 2 is a functional block configuration diagram of a radio communication node 300.
Fig. 3 is a functional block configuration diagram of UE 200.
Fig. 4 is an operation illustration diagram relating to data transmission and reception between a network and UE 200 via a radio communication node according to Operation Example 1-1.
Fig. 5 is an operation illustration diagram relating to data transmission and reception between a network and UE 200 via a radio communication node according to Operation Example 1-2.
Fig. 6 is a diagram illustrating an example of a communication sequence relating to instructions in a data communication method according to Operation Example 1-3.
Fig. 7 is a diagram illustrating an example of a positional relationship between movement of a radio communication node (car terminal) and UE 200 according to Operation Example 2.
Fig. 8 is a diagram illustrating an example of a communication sequence relating to notification of information of the radio communication node according to Operation Example 2.
Fig. 9 is a diagram illustrating one example of a hardware configuration of UE 200 and radio communication nodes 300 to 302.

### Description of Embodiment

One embodiment will be described below with reference to the drawings. The same functions and configurations are given the same or similar symbols to omit the description thereof as suited.

### (1) Overall Schematic Configuration of Radio Communication System

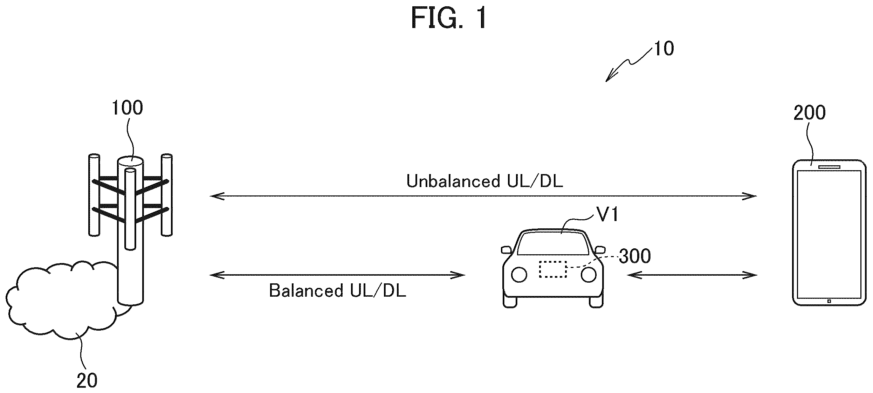

Fig. 1 is an overall schematic configuration diagram of a radio communication system 10 according to this embodiment. The radio communication system 10 is a radio communication system designed according to 5G New Radio (NR), and includes the Next Generation-Radio Access Network 20 (hereinafter, NG-RAN20), a terminal 200 (User Equipment 200, hereinafter UE 200), and a radio communication node 300 installed in a vehicle V1.

The radio communication system 10 may be a radio communication system designed in accordance with a system called Beyond 5G, 5G Evolution, or 6G.

NG-RAN20 includes a radio base station 100 (hereinafter BS 100). Note, the specific configuration of the radio communication system 10 including the numbers of BS and UE is not limited to the example illustrated in Fig. 1.

In actuality, NG-RAN20 includes a plurality of NG-RAN Nodes, specifically BSs, and is connected to a core network designed in accordance with 5G (5GC, not illustrated). NG-RAN20 and 5GC may be simply expressed as "network".

BS 100 is a radio base station designed in accordance with NR, and performs radio communications with UE 200 in accordance with NR. BS 100 and UE 200 can support Massive MIMO that generates beams with higher directivity, carrier aggregation

(CA) that collectively uses a plurality of component carriers (CC), and dual connectivity (DC) that allows for simultaneous communication between UE and each of the plurality of NG-RAN Nodes, by controlling radio signals transmitted from a plurality of antenna devices.

The radio communication node 300 may configure a parent node or an IAB node in Integrated Access and Backhaul (IAB). IAB has a configuration where radio access to UE 200 and radio backhaul between the radio communication nodes are integrated.

The parent node may be referred to as higher node in relation to the IAB node. Moreover, a parent node may also be referred to as IAB donner. The IAB node may be referred to as lower node in relation to the parent node.

IAB reuses existing functions and interfaces defined for radio access. In particular, Mobile-Termination (MT), gNB-DU (Distributed Unit), gNB-CU (Central Unit), User Plane Function (UPF), Access and Mobility Management Function (AMF) and Session Management Function (SMF), as well as corresponding interfaces such as, for example, NR Uu (between MT and gNB/DU), F1, NG, X2, and N4 are used as base lines.

One of major merits of such IAB is that NR cells can be arranged flexibly and with high density without increasing the density of the transport network. IAB can be applied to various scenarios such as outdoor arrangement of small cells, and support for indoor and mobile relays (such as inside a bus or train).

In this embodiment, in particular, the radio communication node 300 may be installed in a vehicle V1 such as a passenger car to be moving constantly. The vehicle V1 may have an autonomous driving function and may be able to support intra-vehicle communication.

As compared to UE 200, the radio communication node 300 can readily realize installation of a compellingly higher battery capacity or memory, higher antenna gain and reception sensitivity, higher power transmission, and installation of radio base station (BS) functions. This enables realization of radio communication that secures a bandwidth (speed) with a good balance between uplink (UL) and downlink (DL).

### (2) Functional Block Configuration of Radio Communication System

Next, the functional block configuration of the radio communication system 10 will be described. Specifically, the functional block configurations of UE 200 and radio communication node 300 will be described. For convenience, the radio communication node 300 will be described first.

### (2.1) Radio Communication Node 300

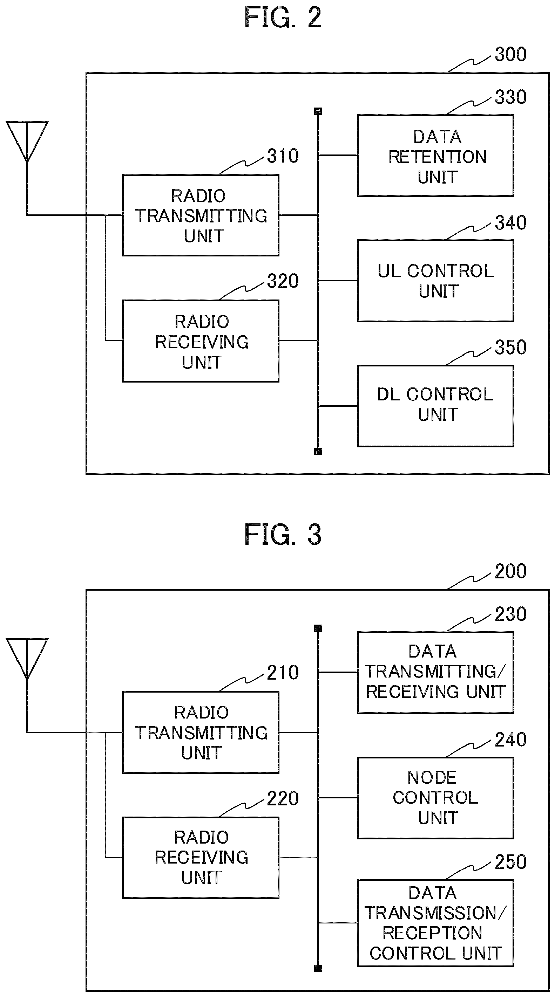

Fig. 2 is a functional block configuration diagram of a radio communication node 300. As illustrated in Fig. 2, the radio communication node 300 includes a radio transmitting unit 310, a radio receiving unit 320, a data retention unit 330, a UL control unit 340, and a DL control unit 350.

The radio transmitting unit 310 transmits uplink signals (UL signals) or downlink signals (DL signals) in accordance with NR. Specifically, the radio transmitting unit 310 transmits UL signals to BS 100 or other radio communication nodes, and transmits DL signals to UE 200 or other radio communication nodes.

The radio receiving unit 320 receives DL signals or UL signals in accordance with NR. Specifically, the radio receiving unit 320 receives DL signals from BS 100 or other radio communication nodes, and receives UL signals from UE 200 or other radio communication nodes.

In this embodiment, the radio transmitting unit 310 can transmit downlink data retained in the data retention unit 330 to UE 200 when radio communication with UE 200 is made possible by a movement of the radio communication node 300 or UE 200. In this embodiment, the radio transmitting unit 310 configures a transmitting unit.

As mentioned above, the radio communication node 300 is installed in the vehicle V1 and movable with the vehicle V1. Radio communication with UE 200 being made possible may mean a condition where a connection via radio can be configured between UE 200 and the radio communication node 300 so that data communication is possible.

Data may mean data transmitted via a data channel. A data channel may include Physical Downlink Shared Channel (PDSCH), Physical Uplink Shared Channel (PUSCH), and the like.

Moreover, the radio transmitting unit 310 can transmit uplink data retained in the data retention unit 330 to the network when the radio communication node 300 moves into an area where high-speed data communication is possible.

An area where high-speed data communication is possible may mean, for example, a cell formed by BS 100, or may be interpreted as an area where CA or DC is executable. Also, high-speed data communication may be interpreted as communication where, while CA or DC may not necessarily be executed, a communication speed of more than a predetermined level can be secured to ensure a predetermined data throughput.

Moreover, high-speed data communication may mean that the data communication between BS 100 and the radio communication node 300 is faster than the data communication between UE 200 and the radio communication node 300, when data communication between UE 200 and the radio communication node 300 and data communication between BS 100 and the radio communication node 300 are compared. Moreover, high-speed data communication may be read as high-capacity data communication.

The radio receiving unit 320 can receive downlink data for UE 200 from the network in an area where such high-speed data communication is possible. In this embodiment, the radio receiving unit 320 configures a receiving unit that receives downlink data for UE 200.

The radio receiving unit 320 can also receive uplink data from UE 200. The uplink data from UE 200 need not necessarily be received in an area where high-speed data communication is possible.

The data retention unit 330 retains data received by the radio receiving unit 320. Specifically, the data retention unit 330 can retain uplink data from UE 200 to the network, and downlink data from BS 100 to UE 200.

After the data retention unit 330 has transmitted the uplink data and downlink data retained therein, the data retention unit may drop such data. Also, the data retention unit 330 may drop such data if the retained uplink data and downlink data are not transmitted after a predetermined time has passed.

The UL control unit 340 executes control relating to UL. Specifically, the UL control unit 340 executes control relating to transmission of uplink data retained in the data retention unit 330.

More specifically, the UL control unit 340 causes the radio transmitting unit 310 to transmit uplink data retained in the data retention unit 330 to the network when the radio communication node 300 moves into an area where high-speed data communication is possible.

The DL control unit 350 executes control relating to DL. Specifically, the DL control unit 350 executes control relating to transmission of downlink data retained in the data retention unit 330.

More specifically, the DL control unit 350 causes the radio transmitting unit 310 to transmit downlink data retained in the data retention unit 330 to UE 200 when radio communication with UE 200 is made possible by a movement of the radio communication node 300.

Also, the DL control unit 350 can cause the radio transmitting unit 310 to transmit node information to UE 200, the node information including the information of a radio base station (BS) located in the surrounding area of UE 200, and of the radio communication node 300 or the like installed in and moving with the vehicle V1.

### (2.2) UE200

Fig. 3 is a functional block configuration diagram of UE 200. As illustrated in Fig. 3, UE 200 includes a radio transmitting unit 210, a radio receiving unit 220, a data transmitting/receiving unit 230, a node control unit 240, and a data transmission/reception control unit 250.

The radio transmitting unit 210 transmits uplink signals (UL signals) in accordance with NR. Specifically, the radio transmitting unit 210 transmits UL signals to BS 100 or the radio communication node 300.

The radio receiving unit 220 receives DL signals in accordance with NR. Specifically, the radio receiving unit 220 receives DL signals from BS 100 or the radio communication node 300.

The radio receiving unit 220 can also receive node information including the information of the radio communication node located and moving in the surrounding area of UE 200 from the network, specifically, via BS 100. In this embodiment, the radio receiving unit 220 configures a receiving unit that receives node information from the network.

The node information may include, not only the information of the moving radio communication node, but also information of a radio base station (BS) located in the surrounding area of UE 200.

The data transmitting/receiving unit 230 transmits uplink data to the network, and receives downlink data for UE 200 from the network (including the radio communication node 300). The uplink data is included in the UL signal and transmitted from the radio transmitting unit 210. The downlink data is included in the DL signal and the radio receiving unit 220 receives the DL signal including the downlink data from the network (including the radio communication node 300).

As described above, data may mean data transmitted via a data channel, and may specifically be interpreted as data known as user data that is transmitted and received by various applications installed in UE 200.

The node control unit 240 can determine which radio communication node is to be the connection destination UE 200 will connect. Specifically, the node control unit 240 determines which radio communication node is to be the connection destination based on the node information received via the radio receiving unit 220.

As mentioned above, the node information includes information of the radio communication node 300 or the like that is installed in and moving with the vehicle V1.

The node information may be determined by the network based on the current positions of UE 200 and radio communication node 300.

The node control unit 240 can select one of Method 1 wherein the movement of the radio communication node 300 (vehicle V1) is predicted (to be described in detail later) and Method 2 that uses a plurality of radio communication nodes, when determining a node (including BS) as a connection destination of UE 200.

The node control unit 240 can select one of these methods in accordance with the contents of the QoS (Quality of Service) indicator that indicates the quality of the radio communication with the applicable node.

The data transmission/reception control unit 250 executes control relating to transmission of uplink data and reception of downlink data. Specifically, the data transmission/reception control unit 250 causes the radio transmitting unit 210 to transmit a UL signal including the uplink data when radio communication with the radio communication node 300 or BS 100 is made possible by a movement of the radio communication node 300 or UE 200.

Also, the data transmission/reception control unit 250 causes the radio receiving unit 220 to receive a DL signal including the downlink data when radio communication with the radio communication node 300 or BS 100 is made possible.

### (3) Operation of Radio Communication System

Next, the operation of the radio communication system 10 will be described. Specifically, the operation relating to transmission of uplink data from UE 200 via the radio communication node 300 or the like and reception of downlink data for UE 200 will be described.

### (3.1) Operation Overview

As mentioned above, the radio communication node 300, which can function as an IAB node, is installed in and moves with the vehicle V1. The radio communication system 10 controls IAB nodes that involve such movement, and realizes more efficient radio communication.

Specifically, control of such IAB nodes will be described through description of Operation Example 1 and Operation Example 2. The overviews of Operation Example 1 and Operation Example 2 are as follows.

### (Operation Example 1)

UE 200 transmits and receives data in the following order in an environment that is outside an area of a fixed station (such as BS 100) capable of high-speed, high-capacity data communication and where no radio backhaul link with nearby radio communication nodes (that may be referred to as car terminals) can be established.

(i) The network preliminarily transmits downlink data to a radio communication node (vehicle) assumed to become communicable with UE 200 in an area where (high-capacity) data communication is possible, and temporarily stores the data in the radio communication node.
(ii) The radio communication node moves, and transmits and receives data to and from UE 200. The uplink data is temporarily stored in the radio communication node.
(iii) After the radio communication node has moved to an area where (high-capacity) data communication is possible, the stored uplink data is transmitted to the network.

### (Operation Example 2)

The network notifies UE 200 of information of a radio communication node that UE 200 can possibly connect to next.

The network may regularly update a list of radio base stations (fixed stations) and radio communication nodes (car terminals) in the vicinity of UE 200.

### (3.2) Operation Examples

Below, Operation Example 1 and Operation Example 2 above will be described in more detail.

### (3.2.1) Operation Example 1

In this operation example, UE 200 transmits and receives data in the following order in an environment that is outside an area of a fixed station (such as BS 100) capable of high-speed, high-capacity data communication and where no radio backhaul link with nearby radio communication nodes (vehicles) can be established.

### (3.2.1.1) Operation Example 1-1

In this operation example, the network predicts the movement of the radio communication node (hereinafter, Method 1).

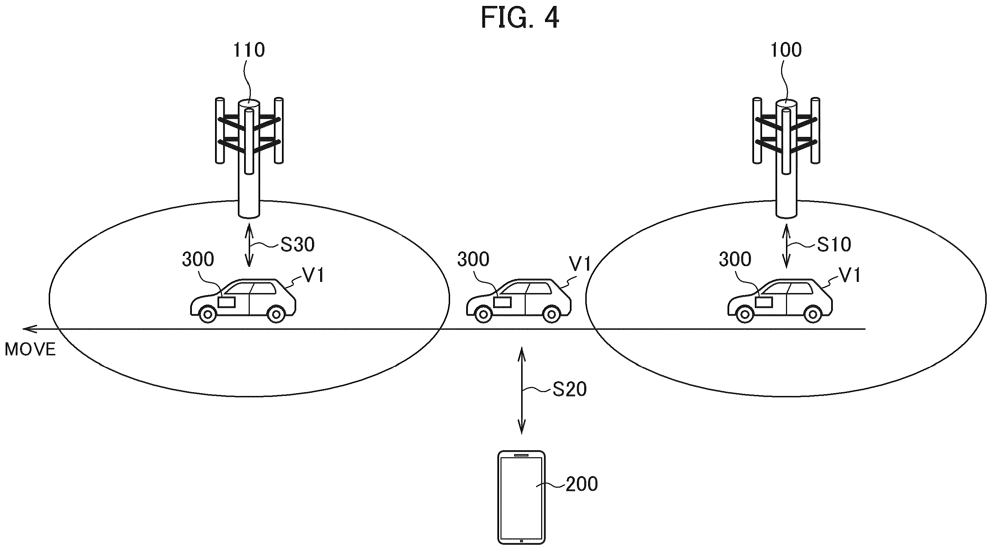

Fig. 4 is an operation illustration diagram relating to data transmission and reception between a network and UE 200 via a radio communication node according to Operation Example 1-1.

As illustrated in Fig. 4, the network, specifically BS 100, preliminarily transmits downlink data to a radio communication node 300 assumed to become communicable with UE 200 in an area where (high-capacity) data communication is possible (S10). The radio communication node 300 receives and temporarily stores this downlink data.

The network may select a radio communication node assumed to become communicable with UE 200 on the basis of position information and movement information such as moving directions and moving speeds of radio communication nodes 300 (vehicles V1).

At the same time with the transmission of the downlink data, the network may notify the node of UE that is the transmission destination of the downlink data and transmission timing.

The radio communication node 300 equipped with base station functions may provide the network with the position information and movement information of the radio communication node 300 itself.

After that, the radio communication node 300 moves, and communication with UE 200 becomes possible. The radio communication node 300 transmits and receives data to and from UE 200 (S20). Specifically, the radio communication node 300 transmits the retained downlink data to UE 200. The UE 200 transmits the uplink data to the radio communication node 300. When there is no uplink data that needs to be transmitted, UE 200 may skip this processing.

As illustrated in Fig. 4, the radio communication node 300 is located outside the area of the cells formed by BS 100 and BS 110 at this timing, so that the radio communication node receives and temporarily retains this uplink data.

After that, the radio communication node 300 moves and enters an area where (high-capacity) data communication is possible. Specifically, the node enters into the cell formed by BS 110.

The radio communication node 300 transmits the retained uplink data to the network, specifically BS 110, within the cell formed by BS 110 (S30).

### (3.2.1.2) Operation Example 1-2

In this operation example (hereinafter, Method 2), data is transmitted and received in a network to UE 200 via a plurality of radio communication nodes (car terminals).

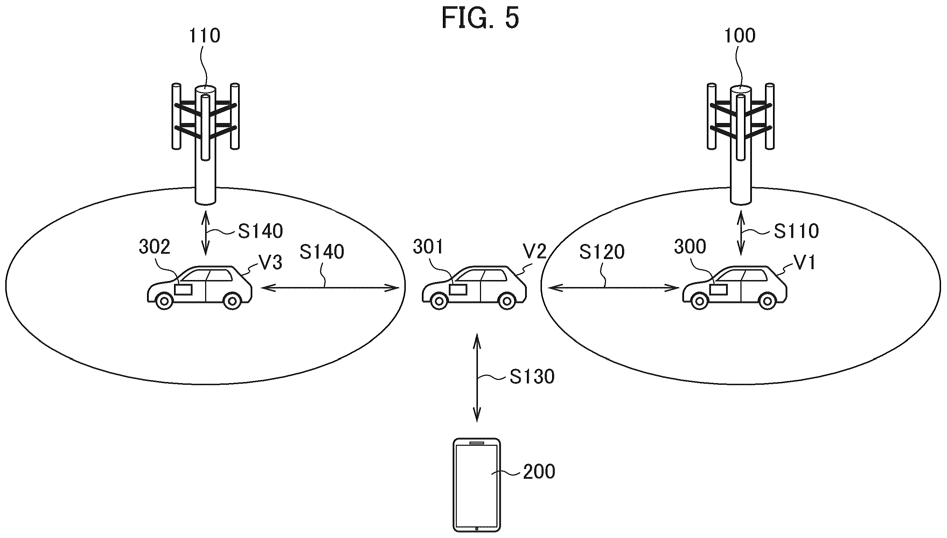

Fig. 5 is an operation illustration diagram relating to data transmission and reception between a network and UE 200 via a radio communication node according to Operation Example 1-2.

The network may operate as follows when it is determined that the network can connect to UE 200 via a plurality of radio communication nodes (vehicles) based on the position information and movement information of the radio communication nodes.

In the example illustrated in Fig. 5, data is transmitted and received via BS 100 to radio communication node 300 (vehicle V1) to radio communication node 301 (vehicle V2) to UE 200.

As illustrated in Fig. 5, the network instructs BS 100 to transmit SS/PBCH Block (SSB) configured by Synchronization Signal (SS) and downlink Physical Broadcast CHannel (PBCH) to the radio communication node 300 (vehicle V1).

BS 100 transmits SSB to the radio communication node 300 so that a connection between the radio communication node 300 and BS 100 is established (S110).

Meanwhile, the radio communication node 301 (vehicle V2) located outside the area of the cell formed by BS 100 connects to the radio communication node 300 (S120). Here, it is assumed that the radio communication node 301 is in a state in which it can execute radio communication with the radio communication node 300.

After the connection between the radio communication node 300 and the radio communication node 301 has been established, the network instructs the radio communication node 301 to transmit SSB to UE 200.

The radio communication node 301 transmits SSB to UE 200 so that a connection between the radio communication node 301 and UE 200 is established (S130).

After the connection between the radio communication node 301 and UE 200 has been established, data is transmitted and received via BS 100 to radio communication node 300 (vehicle V1) to radio communication node 301 (vehicle V2) to UE 200.

When the radio communication node 301 can connect to a radio communication node 302 (vehicle V3) located within the cell formed by BS 110, the radio communication node 301 may connect to the radio communication node 302, and data may be transmitted and received via BS 110 to radio communication node 302 (vehicle V3) to radio communication node 301 (vehicle V2) to UE 200 (S140).

In this operation example, similarly to Operation Example 1-1, the radio communication node 300 or others may retain downlink data and uplink data, and transmit the retained data to the network or UE 200 at a suitable timing.

### (3.2.1.3) Operation Example 1-3

Method 1 relating to data communication method illustrated in Operation Example 1-1 (in which the network predicts movement of radio communication nodes) and Method 2 relating to data communication method illustrated in Operation Example 1-2 (by way of a plurality of radio communication nodes (car terminals)) may be switched over as suited during the operations.

The switching may be instructed by the network in accordance with the positions of the radio communication nodes (car terminals) and/or UE 200. Alternatively, UE 200 may instruct the switching in accordance with the contents of the QoS (Quality of Service) indicator that indicates the quality of the radio communication with the radio communication node.

Alternatively, the switching may be instructed by a radio communication node in accordance with presence or absence of a radio communication node that is connectable with the use of Side link between radio communication nodes.

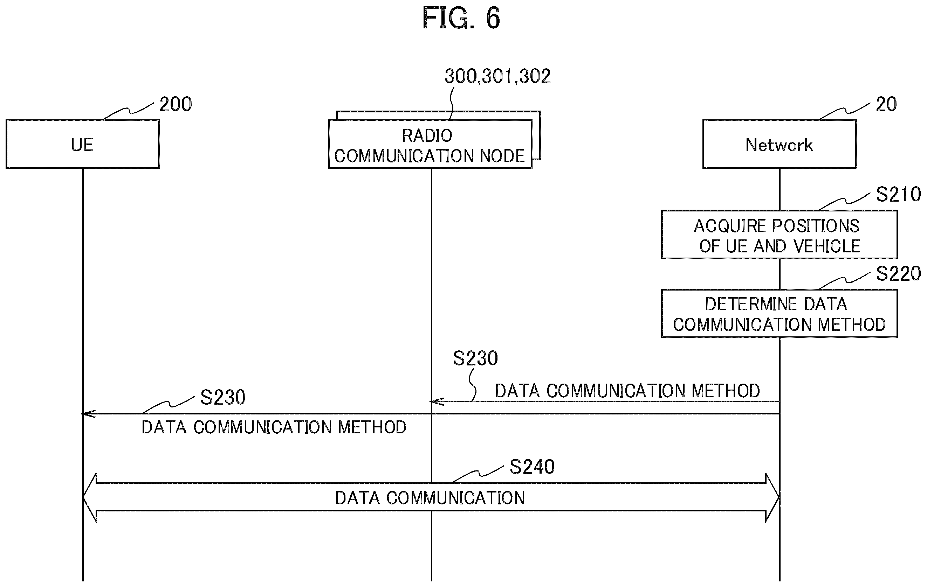

Fig. 6 illustrates an example of a communication sequence relating to instructions in the data communication method according to Operation Example 1-3. Specifically, Fig. 6 illustrates an example of a communication sequence in which the network determines a data communication method and gives instructions.

As illustrated in Fig. 6, the network (NG-RAN20) obtains the positions of UE 200 and the vehicle (radio communication node) (S210). The positions of UE 200 and the vehicle are not particularly limited and may be the information available with the use of a Global Positioning System (GPS), or relative information deducible from the positional relationship with BS 100 or the like. The network may obtain position information such as moving directions and/or moving speeds of UE 200 and the vehicle, too, as mentioned above.

The network determines the data communication method (either Method 1 or Method 2) based on the position information (and movement information) (S220). When the network determines that both methods are possible, the network may prioritize one of the methods (e.g., Method 1) in selecting one.

The network transmits the determined data communication method to UE 200 and the radio communication node (S230). The determined data communication method may be transmitted by higher layer (e.g., radio resource control layer (RRC)) signaling, or lower layer signaling such as physical layer signaling. The data communication method may include information of radio communication nodes present between the network (BS) and UE 200.

The UE 200, radio communication nodes, and network configure a communication route between the network (BS) and UE 200 based on the determined data communication method, and executes data transmission and reception in accordance with Operation Example 1-1 or Operation Example 1-2 described above (S240).

### (3.2.2) Operation Example 2

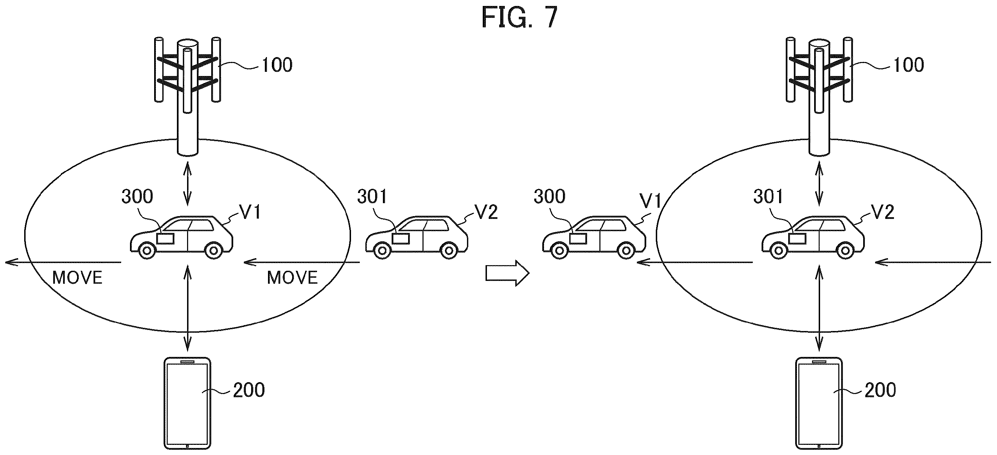

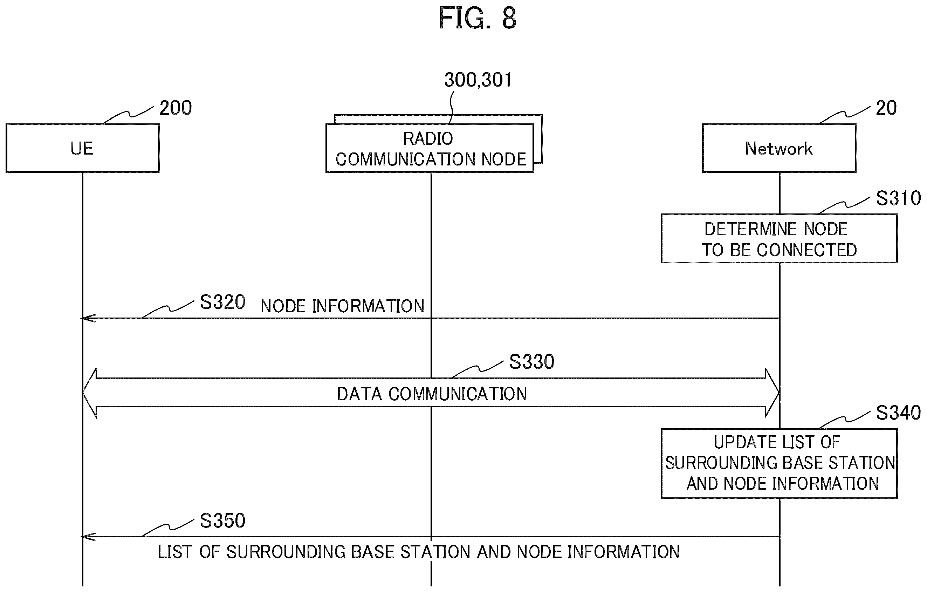

In this operation example, UE 200 is notified of information of a radio communication node that UE 200 can possibly connect to next. Fig. 7 illustrates an example of a positional relationship between movement of a radio communication node (car terminal) and UE 200 according to Operation Example 2. Fig. 8 illustrates an example of a communication sequence relating to notification of information of the radio communication node according to Operation Example 2.

As illustrated in Fig. 7 and Fig. 8, the network determines the radio communication node (vehicle) that UE 200 can possibly connect to next based on the position information and/or movement information of the radio communication node 300 and radio communication node 301 (S310).

As illustrated on the left side in Fig. 7, UE 200 is able to connect to the radio communication node 300 (vehicle V1) at this time point (able to execute radio communication).

Note, however, since the radio communication node 300 is moving away from UE 200, it is determined in the next timing that connection with UE 200 is difficult. Meanwhile, the radio communication node 301 (vehicle V2) is approaching UE 200 as well as the cell formed by BS 100 as illustrated on the right side in Fig. 7, so that the radio communication node 301 is determined as the radio communication node that UE 200 can possibly connect to next.

The position information and/or movement information of UE 200 may also be included in the basis of determination of a radio communication node that UE 200 can possibly connect to next. The timing for the next possible connection may vary in accordance with the moving speeds or the like of the radio communication nodes (vehicles) and/or UE 200.

The network notifies UE 200 of the information of the determined radio communication node 301 (node information) (S320). The node information may be transmitted by higher layer signaling or lower layer signaling as with the data communication method in Operation Example 1-2.

The UE 200, radio communication node 300, and radio communication node 301 change the communication route between UE 200 and BS 100 from that via the radio communication node 300 to that via the radio communication node 301 and executes data communication (S330).

The network may regularly update a list of radio base stations (BS) located in the surrounding area of UE 200 and the node information mentioned above (S340).

The network notifies UE 200 of the updated list regularly, or at the timing of update (S350). A list of radio base stations located in the surrounding area of UE 200 and the node information may be transmitted in place of the node information transmitted at S320.

If UE 200 is located within the cell formed by BS 100 (e.g., when UE 200 is connected to the network using a low frequency band of less than 1 GHz), the node information mentioned above (or the list of radio base stations located in the surrounding area of UE 200 and the node information) may be notified directly from BS 100 to UE 200, or, notified via a radio communication node UE 200 is connected to.

If, on the other hand, UE 200 is located outside the area of the cell formed by BS 100, the information may be notified via the radio communication node UE 200 is connected to.

### (4) Advantageous Effects

The embodiment described above provides the following advantageous effects. Specifically, the radio communication node 300 (and other radio communication nodes, the same applies hereinafter) installed in the vehicle V1 can transmit the retained downlink data to UE 200 when radio communication with UE 200 is made possible by a movement of the radio communication node 300 or UE 200.

Appropriate data communication with UE 200 can thus be realized even when the radio communication node 300 is installed in and moving with the vehicle V1. Namely, appropriate data communication between a network and UE 200 can be realized in accordance with the movement of IAB nodes while using radio communication nodes 300 having the functions of IAB nodes. This can contribute to an increase in throughput of the radio communication system 10 as a whole.

In this embodiment, the radio communication node 300 can transmit the retained uplink data to the network when the radio communication node 300 moves into an area where high-speed data communication is possible. This allows for appropriate data communication in accordance with the current position of the moving radio communication node 300. This can contribute to an increase in throughput of the radio communication system 10 as a whole.

In this embodiment, UE 200 can receive node information including information of a radio communication node located and moving in a surrounding area of UE 200 from a network, and determines a radio communication node as a connection destination based on the received node information. This allows fast and correct recognition by UE 200 of a radio communication node having a high probability of providing a radio communication possibility. This increases the possibility of data communication being realized via a moving radio communication node, and therefore can contribute to an increase in throughput of the radio communication system 10 as a whole.

### (5) Other Embodiments

Although an embodiment has been described above, the present invention is not limited to the embodiment described above. It is obvious to those skilled in the art that various modifications and improvements can be made.

For example, while one example has been described in the embodiment above in which the radio communication node (IAB node) is installed in a vehicle such as a car, the radio communication node may be installed in other vehicles than cars. Other vehicles than cars include railway vehicles such as trains, bicycles, UAVs (Unmanned Aerial Vehicles) such as drones, and airplanes.

Moreover, the block configuration diagrams used for description of the embodiment (Figs. 2 and 3) illustrate blocks of functional units. These functional blocks (structural components) are realized by a suitable combination of at least one of hardware and software. Methods for realizing each functional block are not particularly limited. That is, each functional block may be realized using one physically or logically combined device, or may be realized using two or more physically or logically separate devices connected directly or indirectly (e.g., wired or wireless) to each other. The functional blocks may be realized by combining software with the one device or the plural devices mentioned above.

Functions include determining, deciding, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. However, the functions are not limited to these. For example, a functional block (structural component) that causes transmission may be called a transmitting unit or a transmitter. For any of the above, as described above, the realization method is not particularly limited to any one method.

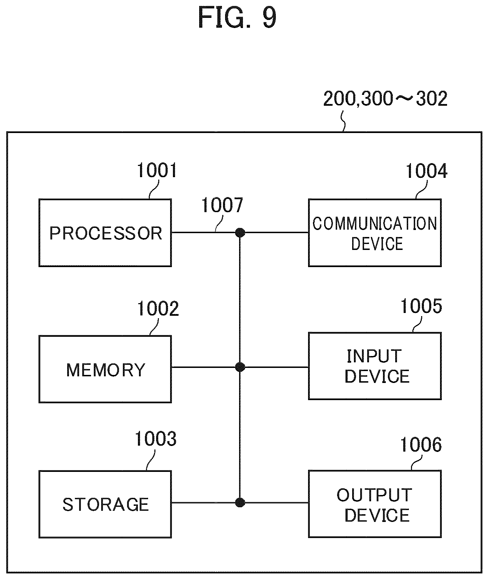

Furthermore, UE 200 and radio communication nodes 300 to 302 (the device) described above can function as a computer that performs the processing of the radio communication methods of the present disclosure. Fig. 9 is a diagram illustrating an example of a hardware configuration of the device. As illustrated in Fig. 9, the device can be configured as a computer device including a processor 1001, a memory 1002, a storage 1003, a communication device 1004, an input device 1005, an output device 1006, a bus 1007, and the like.

Furthermore, in the following description, the term "device" can be read as a circuit, device, unit, and the like. Hardware configuration of the device can be constituted with one or a plurality of the devices illustrated in the drawings, or can be constituted without including some of the devices.

The functional blocks of the device (see Figs. 2 and 3) can be realized by any of hardware elements, or a combination of the hardware elements, of the computer device.

Moreover, the processor 1001 performs computations by loading a predetermined software (program) on hardware such as the processor 1001 and the memory 1002, and realizes various functions of the device by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads out programs (program codes), software modules, data and the like from the storage 1003 and/or the communication device 1004 into the memory 1002, and executes various processing according to the data. The program to be used is a program that can cause the computer to execute at least some of the operations described in the above embodiments. Further, the various processing mentioned above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 may include a high-frequency switch, a duplexer, a filter, a frequency synthesizer, and the like in order to realize, for example, Frequency Division Duplex (FDD) and/or Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 may be configured using a single bus, or may be configured using different buses between pairs of devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that described in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of LTE and LTE-A with 5G).

Unless otherwise contradictory, the order of processing procedures, sequences, flowcharts, and the like of each of the above aspects/embodiments in the present disclosure may be changed. For example, the various steps and the sequence of the steps of the methods described in the present disclosure are exemplary and are not limited to the specific order mentioned above.

The specific operation that is performed by the base station in the present disclosure may be performed by its higher node (upper node) in some cases. In a network constituted by one or more network nodes having a base station, the various operations performed for communication with the terminal may be performed by at least one of the base station and other network nodes other than the base station (for example, MME, S-GW, and the like may be considered, but not limited thereto). While one example has been illustrated above in which there is one network node other than the base station, there may be a combination of some other network nodes (for example, MME and S-GW).

Information and signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be eliminated after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, parameters, and the like described in the present disclosure may be represented by absolute values, or may be expressed as relative values in relation to predetermined values, or may be represented by other corresponding information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note, at least one of a base station and a mobile station may be a device installed in a moving body, a moving body itself, or the like. The moving body may be a vehicle (for example, a car, an airplane, or the like), a moving body that moves unmanned (for example, a drone, an automatically driven vehicle, or the like), and a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be read as wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The structure of the radio frame may include one or a plurality of frames in the time domain. One or a plurality of frames in the time domain may each be called subframe(s). The structure of the subframe may further include one or a plurality of slots in the time domain. The subframe may be a fixed time length (e.g., of 1 ms) that does not depend on numerology.

Numerology may include communication parameters applied to at least one of transmission and reception of a signal or a channel. Numerology may represent, for example, at least one of SubCarrier Spacing (SCS), broadband width, symbol length, cyclic prefix length, Transmission Time Interval (TTI), number of symbols per TTI, radio frame structure, specific filtering processing a transceiver performs in the frequency domain, and specific windowing processing a transceiver performs in the time domain.

The slot structure may include one or a plurality of symbols (Orthogonal Frequency Division Multiplexing (OFDM) symbol, Single Carrier Frequency Division Multiple Access (SC-FDMA) symbol, etc.) in the time domain. The slot may be a time unit based on numerology.

The slot may include a plurality of mini-slots. The mini-slots may each have a structure including one or a plurality of symbols in the time domain. The mini-slot may also be called sub-slot. The mini-slot may have a structure including a fewer number of symbols than the slot. PDSCH (or PUSCH) transmitted in larger time units than mini-slots may be called PDSCH (or PUSCH) mapping type A. PDSCH (or PUSCH) transmitted through use of mini-slots may be called PDSCH (or PUSCH) mapping type B.

Radio frame, subframe, slot, mini-slot, and symbol all represent time units when signals are transmitted. Other names each corresponding to radio frame, subframe, slot, mini-slot, and symbol may also be used.

For example, one subframe may be called transmission time interval (TTI), a plurality of serial subframes may be called TTI, or one slot or one mini-slot may be called TTI. Namely, at least one of subframe and TTI may be a subframe (1 ms) in existing LTE, a shorter period than 1 ms (e.g., 1-13 symbols), or a longer period than 1 ms. Units representing TTI may be referred to as slots, mini-slots and the like instead of subframes.

Here, TTI refers to, for example, a minimum time unit of scheduling in radio communication. For example, an LTE system performs scheduling wherein a base station allocates radio resources (such as frequency band widths available in each user terminal, power transmission, and so on) to each user terminal in TTI units. Note that the definition of TTI is not limited to this.

TTI may be a transmission time unit such as channel-encoded data packet (transport block), code block, codeword and the like, or a processing unit of scheduling, link adaptation, and the like. When a TTI is given, the time zone (e.g., number of symbols) where actual transport blocks, code blocks, codewords and the like are mapped may be shorter than this TTI.

Where one slot or one mini-slot is referred to as TTI, one or more TTIs (i.e., one or more slots or one or more mini-slots) may be the minimum time unit of scheduling. Moreover, the number of slots (number of mini-slots) configuring the minimum time unit of this scheduling may be controlled.

TTI having a time length of 1 ms may be referred to as regular TTI (TTI in LTE Rel. 8-12), normal TTI, long TTI, regular subframe, normal subframe, long subframe, or slot. TTI shorter than regular TTI may be referred to as shortened TTI, short TTI, partial or fractional TTI, shortened subframe, short subframe, mini-slot, sub-slot, or slot.

Furthermore, long TTI (e.g., regular TTI, subframe and the like) may be read as TTI having a time length of more than 1 ms, and short TTI (e.g., shortened TTI or the like) may be read as TTI having a TTI length of 1 ms or more and less than the TTI length of long TTI.

Resource block (RB) is a resource allocation unit in the time domain and the frequency domain, and may include one or a plurality of serial subcarriers in the frequency domain. The number of subcarriers included in RB may be the same irrespective of the numerology, or may be twelve, for example. The number of subcarriers included in RB may be determined based on numerology.

The time domain of RB may include one or a plurality of symbols, and may have a length of one slot, one mini-slot, one subframe, or one TTI. One TTI, one subframe and the like may each have a structure including one or a plurality of resource blocks.

One or a plurality of resource blocks may be referred to as Physical RB (PRB), Sub-Carrier Group (SCG), Resource Element Group (REG), PRB pair, RB pair, and so on.

The resource block may have a structure including one or a plurality of Resource Elements (RE). For example, one RE may be a radio resource domain of one subcarrier and one symbol.

Bandwidth Part (BWP, also referred to as partial bandwidth) may represent a subset of serial common resource blocks (RB) for a numerology in a carrier. Here, common RB may be specified by an RB index based on a common reference point of this carrier. PRB may be defined by a BWP, and numbered within this BWP.

BWP may include BWP for UL (UL BWP) and BWP for DL (DL BWP). There may be one or a plurality of BWPs configured within one carrier for UE.

At least one of the configured BWPs may be active. UE does not necessarily have to assume transmission and reception of a predetermined signal/channel outside an active BWP. Furthermore, "cell" and "carrier" in the present disclosure may be read as "BWP".

The structures of the radio frame, subframe, slot, mini-slot, and symbol described above are merely examples. For example, configurations such as the number of subframes included in a radio frame, the number of slots per subframe or radio frame, the number of mini-slots included in a slot, the number of symbols and RBs included in a slot or a mini-slot, and the number of subcarriers included in RB, as well as the number of symbols, the length of symbols, and the number of Cyclic Prefix (CP) in a TTI can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

"Means" in the configuration of various devices described above may be replaced by "unit", "circuit", "device", and so on.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The term "determining" used in the present disclosure may include a large variety of operations. "Determining" can include, for example, instances of judging, calculating, computing, processing, deriving, investigating, looking up or search or inquiry (e.g., in tables, database, or other data configurations), and ascertaining, regarded as "determining". Furthermore, "determining" can include instances of receiving (e.g., receiving information), transmitting (e.g., transmitting information), input, output, accessing (e.g., accessing data in a memory), regarded as "determining". Furthermore, "determining" can include instances of resolving, selecting, choosing, establishing, and comparing regarded as "determining". Namely, "determining" can include considering something or some operations as being "determined". Also, "determining" may be read as "assuming", "expecting", "considering", and so on.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the scope of the present disclosure as defined by the claims. Therefore, the description of the present disclosure is for the purpose of illustration, and does not have any restrictive meaning to the present disclosure.

### Reference Signs List

10 Radio communication system
20 NG-RAN
100, 110 BS
200 UE
210 Radio transmitting unit
220 Radio receiving unit
230 Data transmitting/receiving unit
240 Node control unit
250 Data transmission/reception control unit
300 to 302 Radio communication node
310 Radio transmitting unit
320 Radio receiving unit
330 Data retention unit
340 UL control unit
350 DL control unit
V1, V2, V3 Vehicle
1001 Processor
1002Memory
1003 Storage
1004 Communication device
1005 Input device
1006Output device
1007 Bus

## Claims

1. A radio communication node (300 to 302) adapted to be installed in a vehicle (V1), the radio communication node (300 to 302) comprising:
a receiving unit (320) configured to receive downlink data for a terminal (200) from a network in an area where high-speed data communication is possible; and
a transmitting unit (310) configured to transmit the downlink data, that is retained, to the terminal when radio communication with the terminal is made possible by a movement of the radio communication node or the terminal,
wherein high-speed data communication means that a communication speed of more than a predetermined level is secured.

2. The radio communication node (300 to 302) according to claim 1, wherein the receiving unit receives uplink data from the terminal, and
the transmitting unit transmits the uplink data that is retained to the network when the radio communication node moves into an area where the high-speed data communication is possible.

3. A system (10) comprising a radio communication node (300 to 302) according to claim 1 or 2 and a terminal (200), the terminal (200) comprising:
a receiving unit (220) receiving node information including information of a radio communication node (300 to 302) located and moving in a surrounding area of the terminal (200) from a network; and
a control unit (240) determining a radio communication node as a connection destination based on the node information.

4. The system according to claim 3, further comprising the network (20), wherein the node information is determined by current positions of the terminal and the radio communication node.

## Patentansprüche

1. Funkkommunikationsknoten (300 bis 302), der dazu ausgebildet ist, in einem Fahrzeug (V1) installiert zu werden, wobei der Funkkommunikationsknoten (300 bis 302) Folgendes umfasst:
eine Empfangseinheit (320), die dazu ausgebildet ist, Downlink-Daten für ein Endgerät (200) aus einem Netzwerk in einem Bereich, in dem eine Hochgeschwindigkeitsdatenkommunikation möglich ist, zu empfangen; und
eine Sendeeinheit (310), die dazu ausgebildet ist, die gehaltenen Downlink-Daten an das Endgerät zu übertragen, wenn durch eine Bewegung des Funkkommunikationsknotens oder des Endgeräts eine Funkkommunikation mit dem Endgerät möglich wird,
wobei Hochgeschwindigkeitsdatenkommunikation bedeutet, dass eine Kommunikationsgeschwindigkeit von mehr als einem vorgegebenen Niveau gesichert ist.

2. Funkkommunikationsknoten (300 bis 302) nach Anspruch 1, wobei die Empfangseinheit Uplink-Daten von dem Endgerät empfängt, und
die Sendeeinheit die gehaltenen Uplink-Daten an das Netzwerk überträgt, wenn der Funkkommunikationsknoten in einen Bereich gelangt, in dem die Hochgeschwindigkeitsdatenkommunikation möglich ist.

3. System (10), umfassend einen Funkkommunikationsknoten (300 bis 302) nach Anspruch 1 oder 2 und ein Endgerät (200), wobei das Endgerät (200) Folgendes umfasst:
eine Empfangseinheit (220), die Knoteninformation aus einem Netzwerk empfängt, einschließend Informationen eines Funkkommunikationsknotens (300 bis 302), der sich in einem Umgebungsbereich des Endgeräts (200) befindet und sich innerhalb dieses Bereichs bewegt; und
eine Steuereinheit (240), die basierend auf der Knoteninformation einen Funkkommunikationsknoten als Verbindungsziel bestimmt.

4. System nach Anspruch 3, weiter umfassend das Netzwerk (20), wobei die Knoteninformation durch aktuelle Positionen des Endgeräts und des Funkkommunikationsknotens bestimmt ist.

## Revendications

1. Nœud de communication radio (300 à 302) adapté à être installé dans un véhicule (V1), le nœud de communication radio (300 à 302) comprenant :
une unité de réception (320) configurée pour recevoir des données de liaison descendante destinées à un terminal (200) en provenance d'un réseau dans une zone où une communication de données à grande vitesse est possible ; et
une unité de transmission (310) configurée pour transmettre les données de liaison descendante, qui sont conservées, au terminal lorsque la communication radio avec le terminal est rendue possible par un déplacement du nœud de communication radio ou du terminal,
dans lequel une communication de données à grande vitesse signifie qu'une vitesse de communication supérieure à un niveau prédéterminé est garantie.

2. Nœud de communication radio (300 à 302) selon la revendication 1, dans lequel l'unité de réception reçoit des données de liaison montante en provenance du terminal, et
l'unité de transmission transmet les données de liaison montante qui sont conservées au réseau lorsque le nœud de communication radio se déplace dans une zone où la communication de données à grande vitesse est possible.

3. Système (10) comprenant un nœud de communication radio (300 à 302) selon la revendication 1 ou la revendication 2 et un terminal (200), le terminal (200) comprenant :
une unité de réception (220) recevant des informations de nœud incluant des informations d'un nœud de communication radio (300 à 302) situé et se déplaçant dans une zone environnante du terminal (200) en provenance d'un réseau ; et
une unité de commande (240) déterminant un nœud de communication radio comme destination de connexion sur la base des informations de nœud.

4. Système selon la revendication 3, comprenant en outre le réseau (20), dans lequel les informations de nœud sont déterminées par les positions actuelles du terminal et du nœud de communication radio.
